# FASCICULE DE BREVET EUROPEEN

(11) **EP 0 900 644 B1**
(45) Date de publication et mention de la délivrance du brevet: **11.12.2002**
(21) Numéro de dépôt: 98401992.7
(22) Date de dépôt: 05.08.1998
(51) Int. Cl.: B29C 67/00, D04H 1/00

(54) **Procédé de réalisation d'une structure fibreuse pour pièce de matière composite fibres-matrice et structure fibreuse ainsi obtenue**
Verfahren zur Herstellung eines Verbundmaterials mit Kernfasern und damit hergestellte Faserstruktur
Process of making a fibrous structure for a fibres-matrix composite and fibrous structure made thereof

(30) Priorité: 04.09.1997 FR 9710995
(43) Date de publication de la demande: 10.03.1999
(73) Titulaire: AEROSPATIALE MATRA, 75016 Paris (FR)
(72) Inventeur: Cahuzac, Georges Jean Joseph Antoine, 33110 Le Bouscat (FR); Decraecker, Patrick Georges Jacques, 33460 Arsac (FR)
(74) Mandataire: Bonnetat, Christian

(56) Documents cités:
- EP-A- 0 556 088
- PATENT ABSTRACTS OF JAPAN vol. 012, no. 201 (M-707), 10 juin 1988 & JP 63 005892 A (SANOYASU:KK), 11 janvier 1988
- DATABASE WPI Section Ch, Week 9234 Derwent Publications Ltd., London, GB; Class A32, AN 92-281482 XP002067023 & JP 04 193507 A (MITSUBISHI HEAVY IND CO LTD)

## Description

La présente invention concerne un procédé de réalisation d'une structure fibreuse pour une pièce de matière composite fibres-matrice, ainsi que la structure fibreuse réalisée par la mise en oeuvre de ce procédé.

On remarquera que le document JP-A-63 005892 décrit un procédé de réalisation d'une structure fibreuse consistant à :
a) réaliser une pièce fibreuse souple et poreuse représentant la structure fibreuse ;
b) imprégner la pièce fibreuse d'un liquide congelable ;
c) refroidir la pièce ainsi imprégnée de liquide congelable, jusqu'à obtenir la congélation dudit liquide congelable imprégné dans ladite pièce et la rigidification de ladite pièce ; et
d) usiner par faisceau laser ladite pièce ainsi rigidifiée à la forme désirée.

On sait qu'une pièce de matière composite est constituée d'une structure fibreuse, noyée dans une matrice durcie. Il en résulte donc que la forme de la structure fibreuse est. liée directement à la forme désirée pour ladite pièce de matière composite. Aussi, lorsque cette dernière présente une forme complexe; il est difficile --et parfois impossible-- de donner à la structure fibreuse la forme optimale pour la pièce de matière composite à obtenir, et ceci d'autant plus que ladite structure fibreuse est naturellement souple.

La présente invention a pour objet de remédier à cet inconvénient et de permettre la réalisation de structures fibreuses, pour pièces de matière composite, de formes complexes.

A cette fin, selon l'invention, le procédé de réalisation d'une structure fibreuse pour une pièce de matière composite fibres-matrice comprend les étapes suivantes :
a) on commence par réaliser une ébauche fibreuse, souple et poreuse, d'une pièce fibreuse représentant une partie de ladite structure fibreuse ;
b) on place ladite ébauche dans un moule ouvert, dont la forme de l'empreinte correspond au moins approximativement à la surface extérieure d'une partie de ladite pièce fibreuse, et on solidarise ladite ébauche audit moule, après quoi on imprègne ladite ébauche poreuse d'un liquide congelable ;
c) on refroidit ladite ébauche, ainsi imprégnée de liquide congelable, jusqu'à obtenir la congélation dudit liquide congelable imprégné dans ladite ébauche et, par voie de conséquence, la rigidification de ladite ébauche ;
d) on usine au moins partiellement ladite ébauche ainsi rigidifiée à la forme désirée pour ladite pièce fibreuse ;
e) après décongélation dudit liquide imprégné dans ladite ébauche usinée, on élimine ledit liquide ; et
f) on solidarise ladite pièce fibreuse usinée, maintenue solidaire dudit moule, à au moins une pièce fibreuse additionnelle pour former ladite structure.

Ainsi, grâce au fait que selon la présente invention, ladite ébauche est rigidifiée par le liquide congelé qui l'imprègne, on peut usiner cette ébauche, par exemple par fraisage, tournage, détourage, limage, perçage, etc ..., pour obtenir une pièce fibreuse de forme complexe.

Une telle ébauche peut être constituée par une pièce de feutre, une pièce de tissage, une pièce de tressage, une pièce de fils entrelacés, une pièce constituée par dépose de fils ou de bandes fibreuses, etc ... ou bien par assemblage de telles pièces. La principale particularité de cette ébauche est de devoir être poreuse pour pouvoir être imprégnée d'une quantité de liquide congelable appropriée à la rigidification et à l'usinage de cette ébauche.

La ou les pièces fibreuses additionnelles peuvent elles-mêmes être obtenues par un usinage d'une ébauche, conformément à la présente invention ou par tout autre moyen.

Grâce à la mise en oeuvre du procédé de l'invention, on peut ainsi réaliser les parties de forme complexe de la structure fibreuse par usinage et les parties de forme simple de ladite structure par tout autre moyen connu, par exemple tissage, tressage, aiguilletage, etc ... De plus, elle permet, en prévoyant plusieurs pièces fibreuses, d'optimiser les directions des fibres dans chacune desdites pièces fibreuses constituant la structure fibreuse, afin de conférer à cette dernière des propriétés mécaniques appropriées.

De plus, l'utilisation d'un moule ouvert permet de limiter l'aire des surfaces de ladite ébauche à usiner et de réserver l'usinage aux surfaces de ladite ébauche qui doivent présenter les formes les plus complexes.

Par ailleurs, il est avantageux que la surface, par laquelle ladite pièce fibreuse usinée est solidarisée à une pièce fibreuse additionnelle, soit usinée au cours de l'opération d), décrite ci-dessus. Ainsi, non seulement ladite pièce fibreuse peut s'adapter au mieux à la forme de ladite pièce fibreuse additionnelle, mais encore ladite partie usinée se retrouve à l'intérieur de ladite structure fibreuse.

On remarquera de plus que, du fait que la pièce fibreuse usinée résultant de l'usinage de ladite ébauche est maintenue solidaire dudit moule, 'on favorise la réalisation de l'opération de solidarisation de la pièce fibreuse usinée et de la pièce fibreuse additionnelle, ainsi que la précision de forme de la structure fibreuse.

Pour assurer cette précision de forme, l'empreinte du moule doit bien entendu, en théorie, présenter une forme identique à celle de la surface extérieure de la partie correspondante de la pièce fibreuse usinée. Cependant, dans certains cas, l'empreinte du moule peut être légèrement différente en forme de ladite surface extérieure, la forme exacte étant donnée à ladite surface extérieure par adaptation de la pièce fibreuse usinée à ladite pièce fibreuse additionnelle, grâce à la souplesse de ladite pièce fibreuse usinée, lors de la solidarisation desdites pièces fibreuses. Grâce à cette approximation de la forme de l'empreinte du moule, il est parfois possible de simplifier l'opération d'usinage d), en simplifiant la forme de la surface usinée.

De préférence, aussi bien la solidarisation entre ladite pièce fibreuse usinée et ladite pièce fibreuse additionnelle que la solidarisation entre ladite ébauche et ledit moule peuvent être obtenues par piquage ou moyen analogue. Cependant, la solidarisation entre l'ébauche et le moule peut résulter de l'usage de picots ou analogues, solidaires dudit moule et pénétrant dans ladite ébauche, tandis que la solidarisation entre la pièce fibreuse usinée et la pièce fibreuse additionnelle peut être obtenue par des broches.

Il va de soi que la présente invention concerne également les structures fibreuses constituées de l'assemblage d'une ou de plusieurs pièces fibreuses usinées avec des pièces fibreuses additionnelles, dans lesquelles la ou les pièces usinées sont obtenues par la mise en oeuvre du procédé décrit ci-dessus.

Les figures du dessin annexé feront bien comprendre comment l'invention peut être réalisée. Sur ces figures, des références identiques désignent des éléments semblables.

La figure 1 illustre en perspective un exemple de structure fibreuse à réaliser conformément au procédé de la présente invention.

La figure 2 illustre, également en perspective, une première pièce fibreuse'pour la réalisation de la structure de la figure 1.

Les figures 3A, 3B et 3C illustrent schématiquement la mise en oeuvre du procédé conforme à la présente invention pour l'obtention d'une seconde pièce fibreuse, destinée à la réalisation de la structure de la figure 1.

La figure 4 illustre schématiquement la solidarisation desdites première et seconde pièces fibreuses, pour l'obtention de la structure fibreuse de la figure 1.

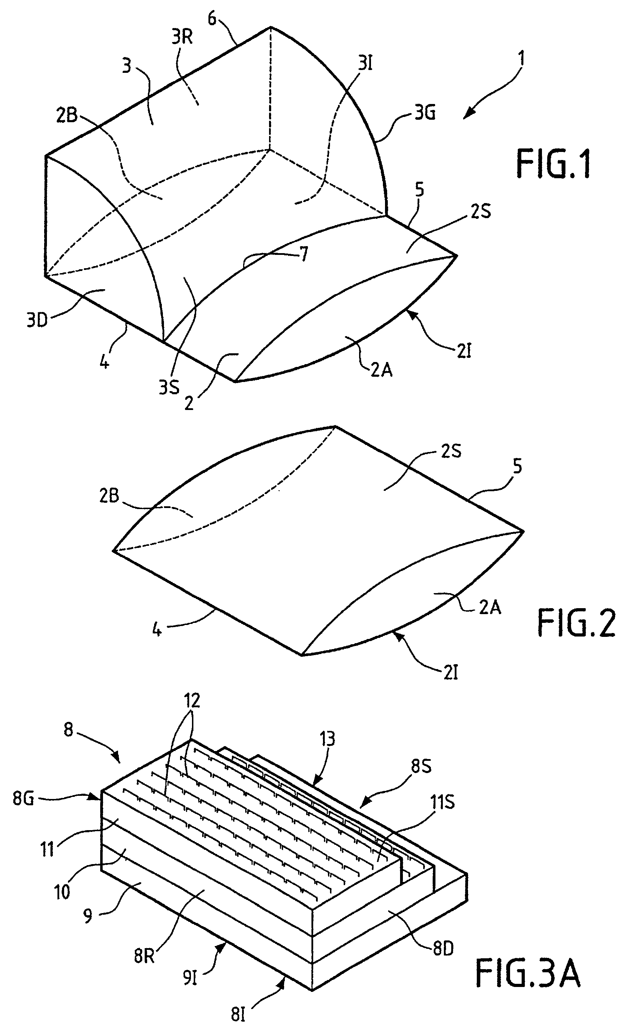

Pour illustrer le procédé conforme à la présente invention, on a choisi de décrire ci-après la réalisation de la structure fibreuse 1, montrée par la figure 1.

Cette structure fibreuse 1 comporte un élément fibreux plat 2 (voir également la figure 2) portant un bourrelet fibreux 3 à l'une de ses extrémités.

Ledit élément fibreux plat 2 est délimité par deux sections d'extrémité 2A et 2B, ainsi que par une surface supérieure bombée 2S et une surface inférieure bombée 2I se rejoignant en deux lignes latérales 4 et 5. Il peut être réalisé, de façon connue, par tissage. Par exemple, ce tissage comporte plusieurs niveaux superposés de fils de trame et les fils de chaîne passent autour de fils de trame de niveaux différents.

Le bourrelet fibreux 3 s'étend sur toute la largeur de l'élément fibreux plat 2 et il est délimité :
- par deux faces latérales d'extrémité 3G et 3D ;
- par une face arrière 3R à l'aplomb de la face d'extrémité 2B de l'élément 2 et en saillie par rapport à la surface supérieure 2S de celui-ci ;
- par une face supérieure bombée 3S s'abaissant, depuis le bord supérieur 6 de la face arrière 3R, jusqu'à la face supérieure 2S de l'élément 2, qu'elle coupe suivant la ligne d'intersection courbe 7 ; et
- par une face inférieure 3I, comprenant ladite ligne 7 et présentant une forme complémentaire de celle de la surface supérieure 2S de l'élément 2, pour pouvoir s'y adapter.

Ainsi, le bourrelet 3 présente la forme générale d'un prisme triangulaire curviligne.

Pour obtenir ce bourrelet 3, on commence par en réaliser une ébauche fibreuse, souple et poreuse 8. Dans l'exemple de réalisation de la figure 3A, cette ébauche 8 est constituée par l'empilement d'une pluralité de couches 9, 10, 11 liées entre elles par des lignes de piquage 12. Toutes les couches 9, 10, 11 ont la même longueur qui correspond à celle du bourrelet 3 et, de plus, elles sont alignées latéralement et longitudinalement, de manière à définir, pour l'ébauche 8, deux faces latérales d'extrémité 8G et 8D (correspondant aux faces latérales d'extrémité 3G et 3D du bourrelet 3) et une face arrière 8R (correspondant à la face arrière 3R du bourrelet 3).

En revanche, la largeur des couches 9, 10, 11 décroît de la couche inférieure 9 à la couche supérieure 11, de sorte que la face supérieure 8S de l'ébauche 8 est formée de la face plane supérieure 11S de la couche 11 et de gradins 13, opposés à la face arrière 8R. La face inférieure 8I de l'ébauche 8 est formée par la face plane inférieure 9I de la couche 9.

Chaque couche 9, 10, 11 est souple, fibreuse et poreuse. Elle est par exemple constituée d'une structure tissée, de type semblable à celle de l'élément fibreux 2.

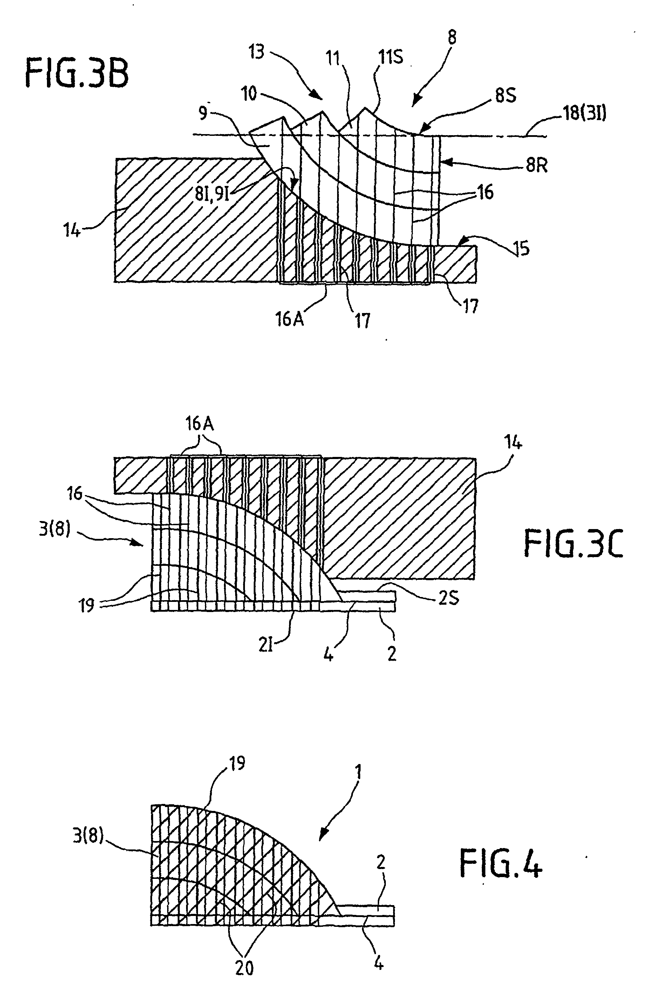

Comme l'illustre la figure 3B, l'ébauche 8 est mise en place sur un moule ouvert rigide 14, dont l'empreinte 15 a la forme de la face supérieure bombée 3S du bourrelet 3. L'ébauche 8 est appliquée contre l'empreinte 15 par sa face inférieure 8I, qui se déforme en se conformant à cette empreinte 15 du fait de la souplesse de l'ébauche 8. De plus, ladite ébauche est solidarisée du moule 14, par exemple par des points de piqûre 16, traversant des canaux 17 prévus à cet effet dans ledit moule 14. Une telle solidarisation pourrait également être obtenue par des pointes ou picots (non représentés) solidaires dudit moule 14 et pénétrant dans ladite ébauche 8. Après fixation, la face supérieure déformée 8S de l'ébauche 8, c'est-à-dire la face supérieure 11S et les gradins 13, apparaît à l'extérieur de l'empreinte 15.

Ensuite, l'ébauche poreuse 8, ainsi solidarisée du moule 14, est soumise à une opération d'imprégnation par un liquide congelable, par exemple de l'eau, de façon que ce liquide pénètre dans les pores de l'ébauche 8, après quoi l'ébauche 8 imprégnée et le moule 14 solidaire de l'ébauche 8 sont soumis à un refroidissement suffisant pour congeler le liquide d'imprégnation et, par voie de conséquence, pour rigidifier ladite ébauche. Cette opération de rigidification de l'ébauche 8 peut être effectuée dans un congélateur (non représenté).

Après congélation et rigidification appropriées, l'ensemble de l'ébauche 8 et du moule 14 est sorti dudit congélateur et l'ébauche 8 est fraisée pour conférer à la face supérieure 8S de l'ébauche 8 la forme de la face inférieure 3I du bourrelet 3, c'est-à-dire la forme complémentaire de la face supérieure 2S de l'élément 2. Sur la figure 3B, le fraisage est schématisé par la ligne 18 en traits mixtes.

Après usinage de la face supérieure 31, l'ébauche 8 est devenue le bourrelet 3 et l'ensemble du bourrelet 3 et du moule 14 est réchauffé (par chauffage ou par réchauffement naturel ambiant) et le liquide d'imprégnation décongelé est éliminé.

Comme l'illustre la figure 3C, le bourrelet 3, maintenu en forme par le moule 14 duquel il reste solidaire, est appliqué par sa face inférieure 3I à l'emplacement approprié de la face supérieure 2S de l'élément 2 et rendu solidaire de ce dernier par des points de piqûres 19, par exemple réalisés à partir de la face 2I de l'élément 2. Une telle solidarisation pourrait être également obtenue grâce à des broches (non représentées) insérées dans les canaux 17.

Après cette solidarisation, on obtient la structure fibreuse 1, qui peut alors être séparée du moule 14 par coupure des portions 16A des fils 16 extérieures à ce dernier (voir la figure 4).

On voit ainsi que, dans le bourrelet 3 réalisé selon le mode opératoire décrit ci-dessus :
- les faces latérales d'extrémité 3G et 3D et la face arrière 3R proviennent respectivement des faces correspondantes 8G, 8D et 8R de l'ébauche 8 ;
- la face supérieure 3S provient de la face inférieure 8I (91) conformée par le moule 14 ; et
- la face inférieure 3I est réalisée par usinage.

Bien entendu, la structure fibreuse 1 de la figure 4 peut maintenant subir toutes les opérations complémentaires appropriées pour la réalisation de la pièce composite correspondante. Elle peut également être renforcée par des points de piqûre supplémentaires 20.

Dans la description précédente, on a indiqué que la forme de l'empreinte 15 du module 14 correspondait exactement à celle de la face supérieure 3S, tandis que l'usinage 18 conférait à la face supérieure 8S la forme exacte de la face inférieure 3I.

Cependant, il peut être avantageux de profiter de la souplesse du bourrelet 3 fabriqué à partir de l'ébauche 8 pour simplifier l'usinage 18.

Par exemple, il est avantageux que la face bombée 3I puisse être obtenue par un usinage plan et non plus concave (ou convexe). A cette fin :
- on peut donner à l'empreinte 15 une forme légèrement différente de celle de la face supérieure 3S, de sorte que l'on obtiendra un bourrelet ayant une face supérieure différente de la face supérieure exacte 3S ;
- on peut donner à la face supérieure 8S, par usinage 18, une forme plane, donc différente de la forme courbe 3I,
à la condition toutefois que, grâce à la souplesse du bourrelet 3' ainsi obtenu, ce bourrelet se déforme, lorsque sa face plane est appliquée sur la face supérieure 2S et est amenée à se déformer pour épouser parfaitement celle-ci, de façon que la face supérieure prenne, par déformation, la forme exacte de la face supérieure 3S.

## Revendications

1. Procédé de réalisation d'une structure fibreuse (1) pour une pièce de matière composite fibres-matrice,
comprenant les étapes suivantes :
a) on commence par réaliser une ébauche fibreuse (8), souple et poreuse, d'une pièce fibreuse (3) représentant une partie de ladite structure fibreuse (1) ;
b) on place ladite ébauche dans un moule ouvert (14), dont la forme de l'empreinte correspond au moins approximativement à la surface extérieure (3S) d'une partie de ladite pièce fibreuse (3), et on solidarise ladite ébauche (8) audit moule (14), après quoi on imprègne ladite ébauche poreuse (8) d'un liquide congelable ;
c) on refroidit ladite ébauche (8), ainsi imprégnée de liquide congelable, jusqu'à obtenir la congélation dudit liquide congelable imprégné dans ladite ébauche et, par voie de conséquence, la rigidification de ladite ébauche ;
d) on usine (en 18) au moins partiellement ladite ébauche (8) ainsi rigidifiée à la forme désirée pour ladite pièce fibreuse (3) ;
e) après décongélation dudit liquide imprégné dans ladite ébauche usinée, on élimine ledit liquide ; et
f) on solidarise ladite pièce fibreuse usinée (3), maintenue solidaire dudit moule (14), à au moins une pièce fibreuse additionnelle (2) pour former ladite structure.

2. Procédé selon la revendication 1,
**caractérisé en ce que** la surface (31), par laquelle ladite pièce fibreuse usinée (3) est solidarisée à une pièce fibreuse additionnelle (2), est usinée au cours de l'opération d).

3. Procédé selon l'une des revendications 1 ou 2,
**caractérisé en ce que** l'empreinte (15) dudit moule est conformée, d'une part, pour simplifier l'opération d'usinage d) et, d'autre part, pour que ladite pièce fibreuse usinée présente ladite forme extérieure appropriée lorsqu'elle est appliquée, grâce à sa souplesse, par sa surface de solidarisation contre la ou les pièces fibreuses additionnelles.

4. Procédé selon l'une des revendications 1 à 3,
**caractérisé en ce que** la solidarisation entre ladite pièce fibreuse usinée (3) et ladite pièce fibreuse additionnelle (2) est obtenue par piquage ou analogue.

5. Procédé selon l'une des revendications 1 à 4,
**caractérisé en ce que** la solidarisation entre ladite ébauche (8) et ledit moule (14) est obtenue par piquage ou analogue.

## Claims

1. A method of manufacturing a fibrous structure (1) for a composite fibre-matrix material part,
comprising the following steps:
a) a fibrous, flexible and porous blank (8) of a fibrous part (3) representing a part of said fibrous structure (1) is first made;
b) said blank is placed in an open mould (14), the imprint of which corresponds at least approximately to the outer surface (3S) of part of said fibrous part (3) and said blank (8) is attached to said mould (14), after which said porous blank (8) is impregnated with a freezeable liquid;
c) said blank (8) impregnated in this way with freezeable liquid is cooled to freeze said freezeable liquid impregnating said blank and consequently to stiffen said blank;
d) said blank (8) stiffened in this way is machined (at 18) at least partly to the required shape for said fibrous part (3);
e) after thawing said liquid impregnating said machined blank, said liquid is eliminated; and
f) said machined fibrous part (3), still attached to said mould (14), is attached to at least one additional fibrous part (2) to form said structure.

2. A method according to claim 1,
**characterized in that** the surface (31) by which said machined fibrous part (3) is attached to an additional fibrous part (2) is machined during operation d).

3. A method according to either of claims 1 and 2,
**characterized in that** the imprint (15) of said mould is shaped to simplify the machining operation d) and so that said machined fibrous part has said appropriate external shape when its attachment surface is pressed, by virtue of its flexibility, against the additional fibrous part or parts.

4. A method according to any of claims 1 to 3,
**characterized in that** said machined fibrous part (3) is attached to said additional fibrous part (2) by stitching or like means.

5. A method according to any of claims 1 to 4,
**characterized in that** said blank (8) is attached to said mould (14) by stitching or like means.

## Patentansprüche

1. Verfahren zur Herstellung einer Faserstruktur (1) für ein Verbundmaterial mit Kernfasern, bestehend aus folgenden Stufen:
a) zunächst erfolgt die Herstellung eines flexiblen und porösen Faserrohlings (8) für ein Fasermaterial (3), das einen Teil der genannten Faserstruktur (1) darstellt;
b) danach wird der genannte Rohling in ein offenes Werkzeug (14) eingebracht, dessen Matrizenhohlraum über eine Form verfügt, die mindestens annähernd der Außenfläche (3S) eines Teiles des genannten Fasermaterials (3) entspricht, wobei der genannte Rohling (8) mit dem genannten Werkzeug (14) fest verbunden wird und wonach der genannte poröse Rohling (8) mit einer erstarrungsfähigen Flüssigkeit imprägniert wird;
c) der genannte, dergestalt mit erstarrungsfähiger Flüssigkeit imprägnierte Rohling (8) wird so abgekühlt, dass die in den genannten Rohling eingedrungene erstarrungsfähige Flüssigkeit erstarrt und damit der genannte Rohling versteift wird;
d) der genannte dergestalt versteifte Rohling (8) wird zumindest teilweise (entsprechend 18) mechanisch bearbeitet, um ihm die Form zu verleihen, die für das genannte Fasermaterial (3) gewünscht wird;
e) nach dem Auftauen der genannten Flüssigkeit, mit welcher der genannte mechanisch bearbeitete Rohling imprägniert ist, wird die genannte Flüssigkeit abgeführt; und
f) schließlich wird das genannte mechanisch bearbeitete Fasermaterial (3), das in fester Verbindung mit dem Werkzeug (14) gehalten wird, mit mindestens einem zusätzlichen Fasermaterial (2) fest verbunden, um die genannte Struktur herzustellen.

2. Verfahren nach Anspruch 1, **dadurch gekennzeichnet, dass** die Oberfläche (31), über welche das genannte mechanisch bearbeitete Fasermaterial (3) mit einem zusätzlichen Fasermaterial (2) fest verbunden wird, während des Arbeitsganges d) mechanisch bearbeitet wird.

3. Verfahren nach einem der Ansprüche 1 bzw. 2, **dadurch gekennzeichnet, dass** der Matrizenhohlraum (15) des genannten Werkzeuges angepasst ist, um einerseits den Bearbeitungsvorgang d) zu vereinfachen und um andererseits zu erreichen, dass das genannte mechanisch bearbeitete Fasermaterial die genannte geeignete äußere Form annimmt, wenn es dank seiner Flexibilität mit seiner Oberfläche zur festen Verbindung auf das zusätzliche Fasermaterial bzw. auf die zusätzlichen Fasermaterialien aufgesetzt wird.

4. Verfahren nach einem der Ansprüche 1 bis 3, **dadurch gekennzeichnet, dass** die feste Verbindung zwischen dem genannten mechanisch bearbeiteten Fasermaterial (3) und dem genannten zusätzlichen Fasermaterial (2) durch Heften oder ein analoges Verfahren hergestellt wird.

5. Verfahren nach einem der Ansprüche 1 bis 4, **dadurch gekennzeichnet, dass** die feste Verbindung zwischen dem genannten Rohling (8) und dem genannten Werkzeug (14) durch Heften oder ein analoges Verfahren hergestellt wird.
